# EUROPEAN PATENT APPLICATION

(11) **EP 2 019 247 A2**
(43) Date of publication of application: **28.01.2009**
(21) Application number: 08160207.0
(22) Date of filing: 11.07.2008
(51) Int. Cl.: F16L 37/02

(54) **Connection structure of metal-resin composite pipes and metal-resin composite pipe for use in the connection structure**

(30) Priority: 21.07.2007 JP 2007190257; 06.11.2007 JP 2007288074
(71) Applicant: Kanaflex Corporation Inc., Osaka-shi, Osaka 530-6017 (JP)
(72) Inventor: Kanao, Shigeki, Hyogo 662-0002 (JP)
(74) Representative: Vossius & Partner

(57) **Abstract**

The present invention aims to provide a connection structure of metal-resin composite pipes that eliminates the need for arranging thick connection flanges and realizes easy connection work. A diameter-expanded part 4 is formed at an opposing end 10 of a first metal-resin composite pipe 1A by pressurizing and deforming outward a reinforcing convex part 3 including the one end 10 together with a main body 2 positioned inside the reinforcing convex part. A diameter-reduced part 5 is formed at the other end 11 of a second metal-resin composite pipe 1B by pressurizing and deforming inward at least the reinforcing convex part 3 including the other end 11. The diameter-reduced part 5 is inserted into the diameter-expanded part 4. A sealing member 6 is interposed in a gap between an inner surface of the diameter-expanded part 4 and an outer surfaces of the diameter-reduced part 5.

## Description

The present invention relates to a connection structure of metal-resin pipes which include each a main body made of synthetic resin with an almost flat inner surface and a reinforcing convex part provided spirally around a periphery of the main body, and which are used for drainage pipe lines under roads and sewage pipe lines, for example.

Conventionally, a Hume pipe made of concrete is commonly used for drainage pipe lines under roads and sewage pipe lines. In recent years, there has been used a synthetic resin pipe that includes a main body with an almost flat inner surface and a reinforcing convex part provided spirally around a periphery of the main body because it has strength equal to or higher than that of the Hume pipe and is advantageous in terms of durability, weight reduction, and labor savings in construction work. Employed for connecting a plurality of such synthetic resin pipes is a structure in which: a half joint having a connection flange within which a packing sheet is set, is arranged at each of opposing ends of pipes; a caulking material is charged into a gap between a waterproof block and a concave portion; the packing sheet is fully pulled, wound around the pipe, and secured with vinyl tape or the like; the other half joint is placed on there from above; and the flanges of both the half joints are tightened with bolts and nuts.

In this structure, however, it is necessary to assemble a pair of upper and lower half joints, a packing sheet, a caulking material and the like at a construction site according to the connection procedure. This takes a great deal of time and labor with a low working efficiency, and requires troublesome parts management. Particularly, heavy burdens would be imposed on workers who move two pipes each to a specific position of a packing sheet arranged on the inner side of a half joint. In addition, there are individual differences in the manners of charging the caulking material and pulling the packing sheet, which leads to variations in quality.

Meanwhile, there has been proposed a connection structure allowing easy and fast pipe connection in which connection flanges are arranged at ends of synthetic resin pipes by welding or the like, for example, and packing materials are provided to contact surfaces of the flanges for face contact, and thus the connection can be done only by tightening the flanges together (see Japanese Unexamined Patent Publication No. 2002-139178). According to this connection structure, it is possible to provide a connection structure with improved workability and high reliability. However, by arranging such connection flanges largely projecting outward at ends of synthetic resin pipes, pipe routing and adjustment becomes difficult after the connection, and the pipes may be uplifted and unstable at the connection part. In addition, these connection flanges must be connected with bolts and nuts, and thus need to have a substantial thickness for keeping connection strength, which results in increase of pipe weight and decrease of working efficiency. Moreover, such a structure waterproofed by connection flanges needs to be of high quality because it may cause water leakage if the flanges are not securely attached and welded to the ends of the pipes in a water-tight manner. Furthermore, the flange surfaces are connected with each other via a packing material, and thus the connected flange surfaces have limits in water-resistant and pressure-resistant properties against the outside and must be uniformly tightened with bolts and nuts. Accordingly, this connection structure provides a limited improvement in working efficiency.

In view of such circumstances as described above, the present invention aims to provide a connection structure of metal-resin composite pipes that eliminates the need for arranging thick connection flanges, realizes easy connection work, avoids weight increase of the pipes, facilitates pipe routing and adjustment after the connection, offers high stability of the connection part, has sufficient water-resistant and pressure-resistant properties, and is easy to manufacture.

The inventors of the present invention carried out intensive studies toward solving the above-mentioned problems, and took notice that, in a metal-resin composite pipe provided on a periphery thereof with a reinforcing convex part made of a metal member, the metal member had the property of keeping a deformed shape of the reinforcing convex part. The inventors then found out that, by deforming one end of the metal-resin composite pipe so as to be expanded in diameter and deforming the other end thereof so as to be reduced in diameter, a structure would be realized in which pipe connection can be easily done by engaging the both ends. In this manner, the inventors have brought the present invention to completion.

More specifically, the present invention provides a connection structure of metal-resin composite pipes for connecting two metal-resin composite pipes with each other at ends thereof, each of the metal-resin composite pipes including a main body made of synthetic resin with an almost flat inner surface and a reinforcing convex part formed of a metal member provided spirally around a periphery of the main body, the connection structure being characterized in that: a first one of the metal-resin composite pipes is provided with a diameter-expanded part at an opposing end thereof by pressurizing and deforming outward the reinforcing convex part including the end together with the main body positioned inside the reinforcing convex part; a second one of the metal-resin composite pipes is provided with a diameter-reduced part at an opposing end thereof by pressurizing and deforming inward at least the reinforcing convex part including the end; the diameter-reduced part of the second metal-resin composite pipe is inserted into the diameter-expanded part of the first metal-resin composite pipe; and a sealing member is interposed in a gap between an inner surface of the diameter-expanded part and an outer surface of the diameter-reduced part.

Herein, the diameter-reduced part preferably crushes under pressure the reinforcing convex part including the end of the second metal-resin composite pipe.

In a preferable structure, a tubular member is attached in a water-tight manner to each of the inner surface of the diameter-expanded part and the outer surface of the diameter-reduced part, and a sealing member is interposed in a gap between these tubular members while the diameter-reduced part is inserted into the diameter-expanded part.

In this case, it is preferable that a first end-binding ring be provided to sandwich a distal end of the diameter-expanded part and a distal end of 1. the tubular member attached to the inner surface thereof, and a second end-binding ring be provided to sandwich a distal end of the diameter-reduced part and a distal end of the tubular member attached to the outer surface thereof.

It is further preferred that a sealing ring be placed at a proximal end of the tubular member attached to the outer surface of the diameter-reduced part in order to seal between the proximal end of the tubular member and the outer surface of the second metal-resin composite pipe.

The tubular member may be made of metal but is preferably composed of a synthetic resin member with a spiral or annular rib.

Further, it is preferable that the diameter-reduced part be tapered down toward an opening end, and also that a tapered tubular member be attached to the outer surface of the diameter-reduced part. In particular, the tubular member to be attached to the inner surface of the diameter-expanded part is preferably tapered in substantially parallel to the tapered tubular member to be attached to the outer surface of the diameter-reduced part.

Moreover, in a preferable structure, the diameter-reduced part is inserted into the tubular member attached to the inner surface of the diameter-expanded part while a ring-shaped sealing member is placed on an exterior of the tubular member attached to the outer surface of the diameter-reduced part. Alternatively, the tubular member attached to the outer surface of the diameter-reduced part may be inserted into the diameter-expanded part while the ring-shaped sealing member is placed on an interior of the tubular member attached to the inner surface of the diameter-expanded part.

The present invention also provides a metal-resin composite pipe used in the connection structure which includes a main body made of synthetic resin with an almost flat inner surface and a reinforcing convex part formed of a metal member provided spirally around a periphery of the main body, the metal-resin composite pipe being characterized in that: a diameter-expanded part is formed at one end thereof by pressurizing and deforming outward the reinforcing convex part including the one end together with the main body positioned inside the reinforcing convex part; and a diameter-reduced part is formed at the other end thereof by pressurizing and deforming inward at least the reinforcing convex part including the other end.

Herein, the diameter-reduced part formed at the other end preferably crushes under pressure the reinforcing convex part including the other end. In addition, a tubular member is attached in a water-tight manner to each of the inner surface of the diameter-expanded part and the outer surface of the diameter-reduced part. Herein, it is preferable that a first end-binding ring be provided to sandwich a distal end of the diameter-expanded part and a distal end of the tubular member attached to the inner surface thereof, and a second end-binding ring be provided to sandwich a distal end of the diameter-reduced part and a distal end of the tubular member attached to the outer surface thereof. It is further preferred that a sealing ring be placed at a proximal end of the tubular member attached to the outer surface of the diameter-reduced part in order to seal between the proximal end of the tubular member and the outer surface of the second metal-resin composite pipe. The tubular member may be made of metal but is preferably composed of a synthetic resin member with a spiral or annular rib. Further, it is preferable that the diameter-reduced part be tapered down toward an opening end, and also that a tapered tubular member be attached to the outer surface of the diameter-reduced part. In particular, the tubular member to be attached to the inner surface of the diameter-expanded part is preferably tapered in substantially parallel to the tapered tubular member to be attached to the outer surface of the diameter-reduced part. Moreover, it is preferable that a ring-shaped sealing member be placed on an exterior of the tubular member attached to the outer surface of the diameter-reduced part or a ring-shaped sealing member be placed on an interior of the tubular member attached to the inner surface of the diameter-expanded part.

According to the present invention as described above, pipe connection can be done only by inserting the diameter-reduced part into the diameter-expanded part, two of which are formed by pressurizing and deforming the pipe ends inward and outward, respectively. This eliminates the need for uniformly tightening bolts and nuts as required in a conventional structure provided with confection flanges, which leads to significant improvement in working efficiency. This also obviates the attachment of conventional separate connection flanges by welding or the like, allowing the pipes to circumvent weight increase and achieve weight reduction. In addition, the pipes are connected by engagement of the diameter-expanded part and the diameter-reduced part, with no flange parts largely protruding outward like conventional connection flanges. It is therefore possible to prevent the connection part of the pipes from largely projecting outward, which facilitates pipe routing and adjustment after the connection and increases stability of the connection part. Furthermore, in such a structure in which the diameter-expanded part and the diameter-reduced part engage with each other, the diameter-expanded part securely covers the connection part. This offers sufficient water-resistant and pressure-resistant properties by a simple sealing mechanism alone, and allows the structure to be easily manufactured as compared with a conventional one in which connection flanges must be accurately attached in a water-tight manner.

Additionally, the diameter-reduced part crushes under pressure the reinforcing convex part including the end of the second metal-resin composite pipe, and therefore the main body inside the reinforcing convex part can be formed without diameter reduction, which allows the main body to circumvent inward deformation that may hamper the flow of water.

Further, a tubular member is attached in a water-tight manner to each of the inner surface of the diameter-expanded part and the outer surface of the diameter-reduced part, and a sealing member is interposed in a gap between these tubular members while the diameter-reduced part is inserted into the diameter-expanded part, whereby stable water-tightness can be easily realized between the tubular members even with the presence of the spiral reinforcing convex part.

Further, the first end-binding ring is provided to sandwich the distal end of the diameter-expanded part and the distal end of the tubular member attached to the inner surface thereof, and the second end-binding ring is provided to sandwich the distal end of the diameter-reduced part and the distal end of the tubular member attached to the outer surface thereof, whereby these distal ends are improved in appearance. In addition, the first end-binding ring can act as a seal for preventing the infiltration of rainwater or the like from the outside into between the distal ends that are exposed to the outside, and the second end-binding ring can act as a seal for preventing the filtration of fluid or the like passing through the inside into between the distal ends that are exposed to the inside.

Additionally, the sealing ring is placed at the proximal end of the tubular member attached to the outer surface of the diameter-reduced part to seal between the proximal end of the tubular member and the outer surface of the second metal-resin composite pipe, thereby also preventing the infiltration of rainwater or the like from the outside and improving the appearance.

Moreover, the tubular member is composed of a synthetic resin member with a spiral or annular rib, which provides reliable sealing while achieving weight reduction.

Moreover, the diameter-reduced part is tapered down toward an opening end and also a tapered tubular member is attached to the outer surface of the diameter-reduced part, which allows the pipe connection to be carried out more smoothly and provides further improvement in sealing performance.
FIG. 1 is an illustrative view showing a general configuration of a connection structure of metal-resin composite pipes relative to a first embodiment of the present invention;
FIG. 2 is a vertical cross-sectional view showing a main section of the connection structure relative to the first embodiment;
FIG. 3 is a vertical cross-sectional view showing a main section of the connection structure in another embodiment relative to the first embodiment;
FIG. 4 is an illustrative view showing a general configuration of metal-resin composite pipes used in the connection structure relative to the first embodiment;
FIG. 5 is a vertical cross-sectional view of the metal-resin composite pipe relative to the first embodiment;
Fig. 6 is a vertical cross-sectional view of a connection structure of metal-resin composite pipes relative to a second embodiment of the present invention; and
FIG. 7 is an exploded view of the connection structure relative to the second embodiment.

Next, embodiments of the present invention will be described in detail with reference to the accompanying drawings.

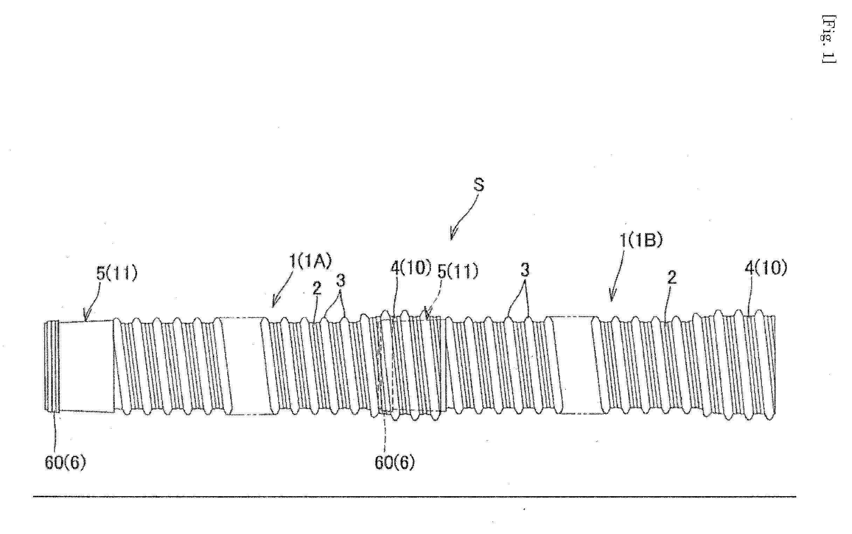

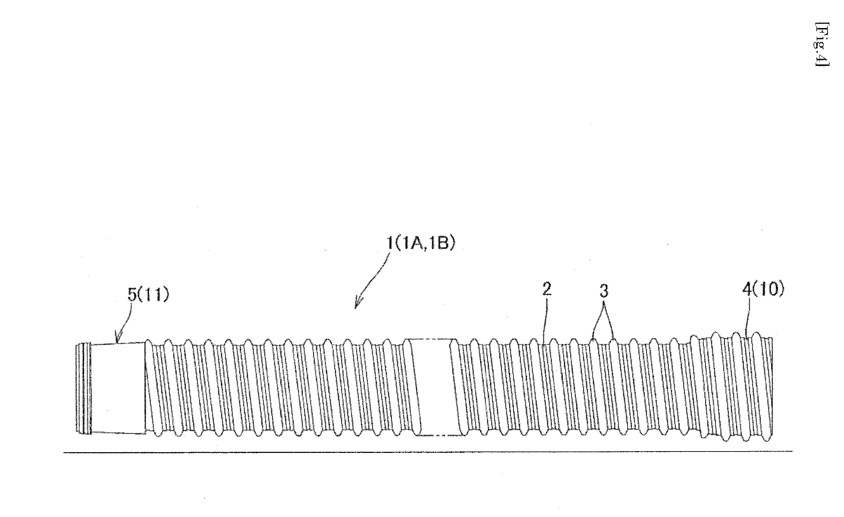

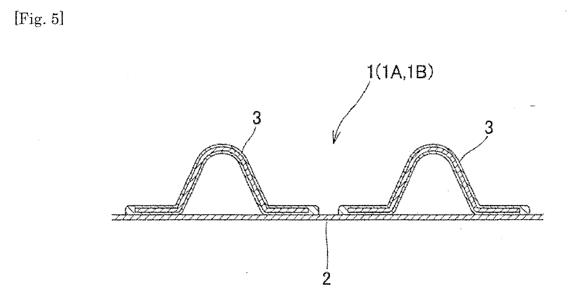

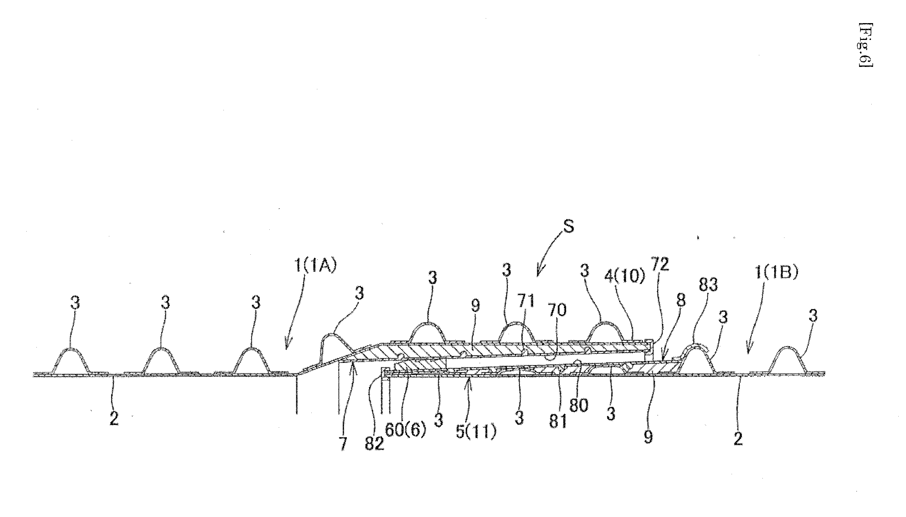

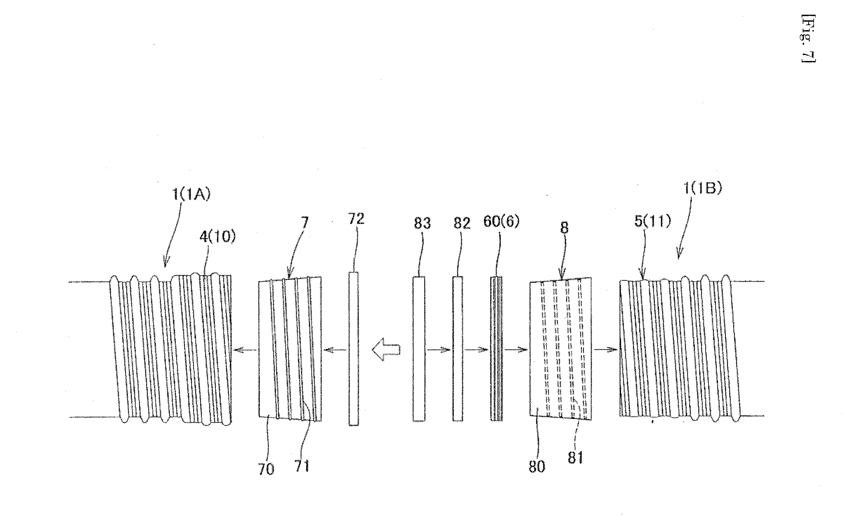

FIG. 1 is an illustrative view showing a general configuration of a connection structure of metal-resin composite pipes relative to the present invention, and FIG. 4 is an illustrative view showing a general configuration of a metal-resin composite pipe used in the connection structure. FIGS. 1 to 5 show a first embodiment of the present invention, and FIGS. 6 and 7 show a second embodiment of the present invention. In the drawings, metal-resin composite pipes are marked with 1 (1A and 1B), a connection structure thereof is marked with S, a main body is marked with 2, a reinforcing convex part is marked with 3, a diameter-expanded part is marked with 4, and a diameter-reduced part is marked with 5.

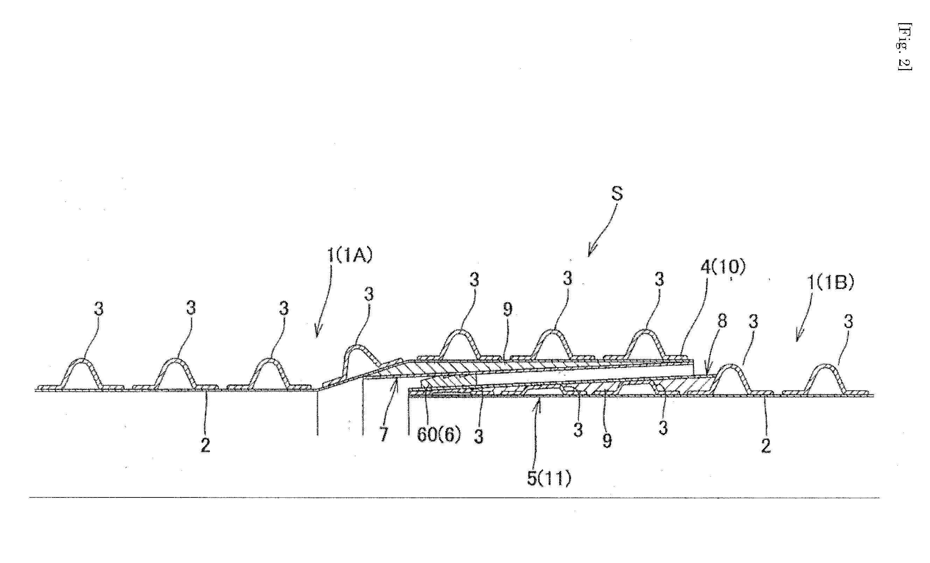

In the connection structure S of metal-resin composite pipes of the present invention, as shown in FIGS. 1 and 2, the two metal-resin composite pipes 1A and 1B include each the main body 2 made of synthetic resin with an almost flat inner surface and the reinforcing convex part 3 formed of a metal member which is provided spirally around a periphery of the main body, and the pipes are connected with each other at ends thereof. In this embodiment, the metal-resin composite pipes 1A and 1B connected with each other are metal-resin composite pipes 1 of the same structure with the diameter-expanded part 4 at one end and the diameter-reduced part 5 at the other end. However, it is understood that a connection structure of the present invention is not limited to this, and as far as pipes have the diameter-expanded part and the diameter-reduced part at least at the opposing ends thereof, one or both of the pipes may not have the diameter-reduced part or the diameter-expanded part at the other end(s).

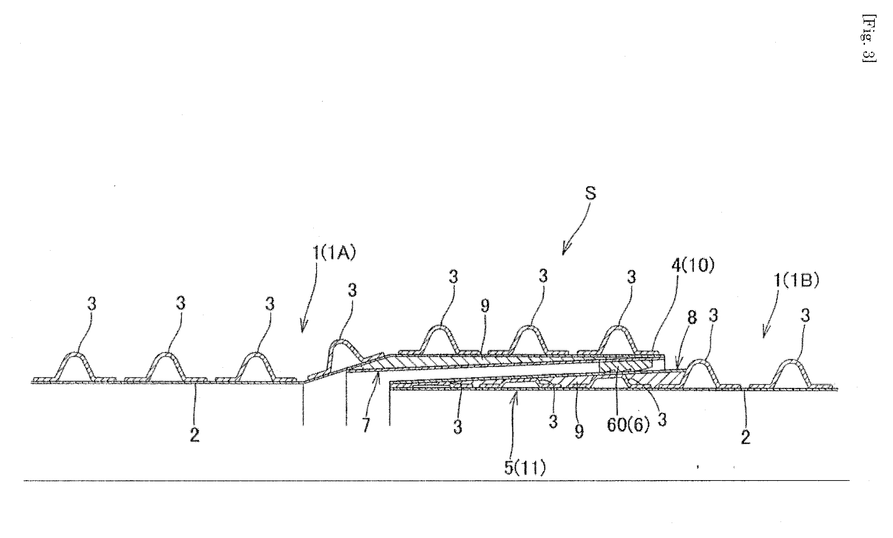

The metal-resin composite pipes 1 (1A and 1B) relative to the first embodiment include, as shown in FIGS. 1, 4 and 5, the main body 2 made of synthetic resin with an almost flat inner surface and the reinforcing convex part 3 formed of a metal member which is provided spirally around a periphery of the main body. At one end 10, as shown in FIGS. 2 and 3, the diameter-expanded part 4 is formed by pressurizing and deforming outward the reinforcing convex part 3 including the one end 10 together with the main body 2 positioned inside the reinforcing convex part. At the other end 11, the diameter-reduced part 5 is formed by pressurizing and deforming inward at least the reinforcing convex part 3 including the other end 11.

Synthetic resin forming the main body 2 is not particularly limited in kind and may be a polyolefin-based resin, a polyvinyl chloride-based resin, or another general resin. Preferably used is a polyethylene resin. The main body 2 and the reinforcing convex part 3 can be efficiently produced by, as is conventionally done, winding a partial molding of the main body 2 spirally around a rotating axis through melt extrusion and depositing it sequentially while supplying the reinforcing convex part 3 spirally as well onto the partial molding to integrate the main body 2 and the reinforcing convex part 3. In this embodiment, as the reinforcing convex part 3, a strip-shaped coating steel sheet with an angle section is supplied spirally around and integrated with the main body 2. Instead of using a coating steel sheet, a steel sheet may be inserted into a resin molded in the same shape as that of the sheet. Alternatively, it is preferable to insert a bar of metal other than steel sheet.

The diameter-expanded part 4 formed at the one end 10 can be easily provided by deforming outward the main body 2 and the reinforcing convex part 3 so as to be expanded in diameter. This allows the reinforcing convex part 3 to be kept in an outward expanding state, whereby the main body 2 of synthetic resin integrated with the reinforcing convex part 3 is also held with a diameter expanded. The diameter-expanded part 4 may be in a shape of a tube with an axially uniform diameter, and also preferably may be in a shape of a trumpet flaring out toward an opening end. In addition, the diameter-reduced part 5 formed at the other end 11 can be easily provided by pressurizing and deforming the other end 11 so as to be reduced in diameter. In this embodiment, only the reinforcing convex part 3 is crushed under pressure, and the main body 2 with a diameter reduced may also be further reduced in diameter.

In this embodiment, tubular members 7 and 8 are attached to the inner surface of the diameter-expanded part 4 and the outer surface of the diameter-reduced part 5, respectively, in a water-tight manner using any one various sealing materials including a natural rubber, various synthetic rubbers such as urethane rubber, butyl rubber, NBR and SBR, water-expanding materials, various thermoplastic elastomers, foaming materials such as polyurethane foam, silicones as caulking agents, various liquid gaskets, and unvulcanized rubbers. These tubular members 7 and 8 are not necessarily essential components. However, by using the tubular members 7 and 8 which can be dimensioned in advance with high accuracy, the pipes can be expected to be sealed with excellent sealing properties between the inner surface of the main body at the pressurized and deformed diameter-expanded part 4 and the reinforcing convex part of the diameter-reduced part 5, and also the connection can be easily carried out, as compared to the case without using these members.

In this embodiment, the diameter-reduced part 5 is tapered down toward an opening end, and also the tapered tubular member 8 is attached to the outer surface of the diameter-reduced part 5. In addition, the tubular member 7 attached to the inner surface of the diameter-expanded part 4 has a tapered shape which is substantially parallel to the tubular member 8 and is at the substantially same angle as that of the tubular member 8. The pipes are sealed with an O-ring 60 as a sealing member 6 placed between these tubular members 7 and 8. These tubular members 7 and 8 are preferably made of a metal such as an iron sheet or a synthetic resin.

Then, pipe connection can be completed with a single motion, i.e. in the metal-resin composite pipes 1 of the above described structure, only by inserting the diameter-reduced part 5 of the second metal-resin composite pipe 1B into the diameter-expanded part 4 of the first metal-resin composite pipe 1A. The O-ring 60 (sealing member 6) may be attached at the time of pipe connection, and alternatively, may be attached in advance to an exterior of the tubular member 8 on a front edge side as shown in FIG. 2, which leads to improvement in working efficiency. In addition, the O-ring 60 (sealing member 6) may be attached in advance to the tubular member 7 of the diameter-expanded part 4 so as to be fitted inside as shown in FIG. 3, for example. For attaching the O-ring 60 in advance to the tubular member 7 of the diameter-expanded part 4, the O-ring 60 is preferably fixed to the tubular member 7 with adhesive or the like. Note that the sealing member 6 such as the O-ring 60 is not particularly limited in shape, structure and attachment position, provided that it securely seals the pipes between the tubular member 7 of the diameter-expanded part 4 and the tubular member 8 of the diameter-reduced part 5. Any of sealing members with various shapes and structures can be attached in an appropriate position.

FIG. 6 shows a connection structure S of metal-resin composite pipes relative to the second embodiment. In this example, a distal end of the diameter-expanded part 4 of a first metal-resin composite pipe 1A and a distal end of the tubular member 7 attached to the inner surface of the diameter-expanded part 4 are aligned, and a first end-binding ring 72 is attached to sandwich these distal ends. Likewise, a distal end of the diameter-reduced part 5 of a second metal-resin composite pipe 1B and a distal end of the tubular member 8 attached to the outer surface of the diameter-reduced part 5 are aligned, and a second end-binding ring 82 is attached to sandwich these distal ends.

A proximal end of the tubular member 8 attached to the outer surface of the diameter-reduced part 5 of the second metal-resin composite pipe 1B is located outside the distal end of the tubular member 7 on the inner surface of the diameter-expanded part 4 when the second metal-resin composite pipe 1B is joined to the first metal-resin composite pipe 1A. Therefore, a sealing ring 83 is further placed to seal between the proximal end of the tubular member 8 and the outer surface of the second metal-resin composite pipe 1B. The first end-biding ring 72, the second end-binding ring 82 and the sealing ring 83 are made of natural or synthetic rubber, soft synthetic resin, or elastomer, for example. As shown in the exploded view of FIG. 7, the first end-binding ring 72 may be attached after the placement of the tubular member 7, and the second end biding ring 82 and the sealing ring 83 may be attached in this order after the placement of the tubular member 8 and O-ring 60. These rings prevent the infiltration of rainwater or the like from the outside and the leakage of fluid or the like from the inside, and also provide the improvement of the appearance.

The tubular members 7 and 8 of this embodiment are formed of synthetic resin. The tubular member 7 is provided with a spiral rib 71 on the outer peripheral surface opposing the diameter-expanded part 4 of the tapered tubular main body 70. The tubular member 8 is also provided with a spiral rib 81 on the inner peripheral surface opposing the diameter-reduced part 5 of the tapered tubular main body 80. Accordingly, the side sealed by the O-ring 60 is kept flat, and the outer peripheral surface and the inner peripheral surface are formed with the ribs that have no influence on sealing performance. These ribs 71 and 81 both stiffen the tubular main bodies 70 and 80 from being bent, and also keep the tubular main bodies 7 and 8 from being detached because these ribs bite into the sealing material 9 charged between the diameter-expanded part 4 or the diameter-reduced part 5.

The ribs 71 and 81 may be plural annular ribs that are formed with a predetermined space left between them, instead of spiral ribs. Although, the ribs 71 and 81 may be formed by injection molding or spiral extrusion molding so as to be integral with the tubular main bodies 70 and 80, the tubular member 7 may be formed by: molding the tubular main body 70; winding the separately molded rib 71 around the outer peripheral surface of the tubular main body 70; and joining the rib 71 to the tubular main body 70. In addition, the ribs 71 and 81 each may be substantially triangle or square in cross section instead of semicircle, and may be a rib as a multi-winding part that is formed by winding in piles at the edge of the tubular main body in spiral extrusion molding of the tubular main body. Further, the ribs are not limited in form to spiral or annular one and may take any other forms. Off course, the prevent invention may have any stiffening means other than the ribs and also may have no stiffening means.
The other structures are basically the same in the first embodiment, and thus given the same reference numerals as those of the first embodiment and will not be described here.

## Claims

1. A connection structure of metal-resin composite pipes for connecting two metal-resin composite pipes with each other at ends thereof, each of the metal-resin composite pipes including a main body made of synthetic resin with an almost flat inner surface and a reinforcing convex part formed of a metal member provided spirally around a periphery of the main body, wherein: a first one of the metal-resin composite pipes is provided with a diameter-expanded part at an opposing end thereof by pressurizing and deforming outward the reinforcing convex part including the end together with the main body positioned inside the reinforcing convex part; a second one of the metal-resin composite pipes is provided with a diameter-reduced part at an opposing end thereof by pressurizing and deforming inward at least the reinforcing convex part including the end; the diameter-reduced part of the second metal-resin composite pipe is inserted into the diameter-expanded part of the first metal-resin composite pipe; and a sealing member is interposed in a gap between an inner surface of the diameter-expanded part and an outer surface of the diameter-reduced part.

2. The connection structure of metal-resin composite pipes according to claim 1, wherein the diameter-reduced part preferably crushes under pressure the reinforcing convex part including the end of the second metal-resin composite pipe.

3. The connection structure of metal-resin composite pipes according to claim 1 or 2, wherein a tubular member is attached in a water-tight manner to each of the inner surface of the diameter-expanded part and the outer surface of the diameter-reduced part, and a sealing member is interposed in a gap between these tubular members while the diameter-reduced part is inserted into the diameter-expanded part.

4. The connection structure of metal-resin composite pipes according to claim 3, wherein a first end-binding ring is provided to sandwich a distal end of the diameter-expanded part and a distal end of the tubular member attached to the inner surface thereof, and a second end-binding ring is provided to sandwich a distal end of the diameter-reduced part and a distal end of the tubular member attached to the outer surface thereof.

5. The connection structure of metal-resin composite pipes according to claim 3 or 4, wherein a sealing ring is placed on an exterior of a proximal end of the tubular member attached to the outer surface of the diameter-reduced part in order to seal between the proximal end of the tubular member and the outer surface of the second metal-resin composite pipe.

6. The connection structure of metal-resin composite pipes according to any one of claims 3 to 5, wherein the tubular member is composed of a synthetic resin member with a spiral or annular rib.

7. The connection structure of metal-resin composite pipes according to any one of claims 3 to 6, wherein the diameter-reduced part is tapered down toward an opening end, and a tapered tubular member is attached to the outer surface of the diameter-reduced part.

8. The connection structure of metal-resin composite pipes according to claim 7, wherein the tubular member to be attached to the inner surface of the diameter-expanded part is tapered in substantially parallel to the tapered tubular member to be attached to the outer surface of the diameter-reduced part.

9. The connection structure of metal-resin composite pipes according to any one of claims 3 to 8, wherein the diameter-reduced part is inserted into the tubular member attached to the inner surface of the diameter-expanded part while a ring-shaped sealing member is placed on an exterior of the tubular member attached to the outer surface of the diameter-reduced part.

10. The connection structure of metal-resin composite pipes according to any one of claims 3 to 8, wherein the tubular member attached to the outer surface of the diameter-reduced part is inserted into the diameter-expanded part while the ring-shaped sealing member is placed on an interior of the tubular member attached to the inner surface of the diameter-expanded part.

11. A metal-resin composite pipe used in the connection structure according to any one of claims 1 to 10, comprising a main body made of synthetic resin with an almost flat inner surface and a reinforcing convex part formed of a metal member provided spirally around a periphery of the main body, wherein: a diameter-expanded part is formed at one end thereof by pressurizing and deforming outward the reinforcing convex part including the one end together with the main body positioned inside the reinforcing convex part; and a diameter-reduced part is formed at the other end thereof by pressurizing and deforming inward at least the reinforcing convex part including the other end.

12. The metal-resin composite pipe according to claim 11, wherein the diameter-reduced part formed at the other end preferably crushes under pressure the reinforcing convex part including the other end.

13. The metal-resin composite pipe according to claim 11 or 12, wherein a tubular member is attached in a water-tight manner to each of the inner surface of the diameter-expanded part and the outer surface of the diameter-reduced part.

14. The metal-resin composite pipe according to claim 13, wherein a first end-binding ring is provided to sandwich a distal end of the diameter-expanded part and a distal end of the tubular member attached to the inner surface thereof, and a second end-binding ring is provided to sandwich a distal end of the diameter- reduced part and a distal end of the tubular member attached to the outer surface thereof.

15. The metal-resin composite pipe according to claim 13 or 14, wherein a sealing ring is placed on an exterior of a proximal end of the tubular member attached to the outer surface of the diameter-reduced part in order to seal between the proximal end of the tubular member and the outer surface of the second metal-resin composite pipe.

16. The metal-resin composite pipe according to any one of claims 13 to 15, wherein the tubular member is composed of a synthetic resin member with a spiral or annular rib.

17. The metal-resin composite pipe according to any one of claims 13 to 16, wherein the diameter-reduced part is tapered down toward an opening end, and a tapered tubular member is attached to the outer surface of the diameter-reduced part.

18. The metal-resin composite pipe according to claim 17, wherein the tubular member to be attached to the inner surface of the diameter-expanded part is tapered in substantially parallel to the tapered tubular member to be attached to the outer surface of the diameter-reduced p art.

19. The metal-resin composite pipe according to any one of claims 13 to 18, wherein a ring-shaped sealing member is placed on an exterior of the tubular member attached to the outer surface of the diameter-reduced part.

20. The metal-resin composite pipe according to any one of claims 13 to 18, wherein a ring-shaped sealing member is placed on an interior of the tubular member attached to the inner surface of the diameter-expanded part.
